# EUROPÄISCHE PATENTSCHRIFT

(11) **EP 0 324 940 B1**
(45) Veröffentlichungstag und Bekanntmachung des Hinweises auf die Patenterteilung: **14.06.1995**
(21) Anmeldenummer: 88120570.2
(22) Anmeldetag: 09.12.1988
(51) Int. Cl.: C08K 5/14, C08L 33/12, C08F 20/14, C08F 2/44, A61N 5/06

(54) **Kunststoffmaterial mit hoher UV-Durchlässigkeit, Verfahren zu dessen Herstellung und dessen Verwendung**
Plastic material with a high UV transmission, method for its preparation and its use
Matière plastique ayant une haute transmittance aux UV, son procédé de préparation et son utilisation

(30) Priorität: 22.01.1988 DE 3801790
(43) Veröffentlichungstag der Anmeldung: 26.07.1989
(73) Patentinhaber: Resart GmbH, D-55120 Mainz (DE)
(72) Erfinder: Besecke, Siegmund M., Dr. Dipl.-Chem., D-6101 Seeheim-Jugenheim (DE); Cramer, Arnim, D-6090 Rüsselsheim (DE)
(74) Vertreter: Weber, Dieter, Dr.

(56) Entgegenhaltungen:
- EP-A- 0 016 870
- DATABASE WPIL, no.81-86226D, Derwent Publications Ltd, London, GB; & JP-A-56-129 243
- Ullmanns Encyklopädie der technischen Chemie, 4. Aufl., Verlag Chemie, Weinheim, 1979, Band 17, Seiten 665-667

## Beschreibung

Es ist bekannt, daß Homo- und Copolymere auf Basis von Methylmethacrylat eine hohe UV-Strahlungsdurchlässigkeit haben und daher beispielsweise als Abdeckungsmaterialien für Solarien, Bestrahlungsgeräte, Gewächshausbauten und dergleichen verwendet werden. Ein Problem bestand darin, daß solche Polymerisate auf der Basis von Methylmethacrylat bei längerer Einwirkung von UV-Strahlen Alterungserscheinungen unterliegen. Diese bestehen beispielsweise aus einer Verminderung der Erweichungstemperatur, der Durchlässigkeit für UV-Strahlen und des Molekulargewichts, was die mechanischen Eigenschaften verschlechtert. Außerdem sind Verfärbungen des Kunststoffmaterials zu beobachten.

Übliche UV-Stabilisatoren, die in solche Polymerisate auf Methylmethacrylatbasis eingearbeitet wurden, führten dazu, daß gerade im UV-Bereich die Durchlässigkeit erheblich verschlechtert wurde.

Beispielsweise aus der EP-B1-0 016 870, der DE-A-3 421 859, der US-A-4 487 900 und der US-A-4 593 064 sind Kunststoffmaterialien auf der Basis von Methylmethacrylat bekannt, deren UV-Strahlendurchlässigkeit mit Hilfe eines Zusatzes sterisch gehinderter Amine auch bei längerer Bewitterung und Einwirkung von UV-Strahlen erhalten bleibt. Insbesondere behalten die Kunststoffmaterialien durch die genannten Zusätze hohe Durchlässigkeit für UV-A-Strahlung (300 bis 400 nm) und für UV-B-Strahlung (260 bis 320 nm). Die Herstellung derartiger sterisch gehinderter Amine ist jedoch relativ aufwendig, so daß man sich bemühte, einen wohlfeilen Ersatz für sie zu erhalten.

Aus DATABASE WPIL, Nr. 81-86226 D, Derwent Publications Ltd., London sind Kunststoff-materiallen aus Polymethylmethacrylat mit 0,01 bis 5 Gew.-% eines Dialkylperoxids bekennt, welches letzteres inhärent eine Halbwertzeit-Temperatur für 10 h von mindesetens 100 °C haben kann.

Aus Ullmanns Encyclopädie der technischen Chemie, 4. Auflage, Verlag Chemie, Weinheim, 1979, Band 17, Seiten 5665 bis 667 weiß man, daß Dialkylperoxide gute thermische Stabilität besitzen.

Die der Erfindung zugrundeliegende Aufgabe bestand somit darin, Kunststoffmaterialien mit dauerhaft hoher UV-Durchlässigkeit unter Verwendung einfacher gebauter und herstellbarer und damit billigerer UV-Stabilisatoren zu bekommen, die es ermöglichen, ohne sterisch gehinderte Amine oder mit einer geringeren Menge derselben auszukommen.

Die erfindungsgemäßen Kunststoffmaterialien mit hoher UV-Durchlässigkeit bestehen aus einem Homo-oder Copolymeren aus 80 bis 100 Gew.-% Methylmethacrylateinheiten und bis zu 20 Gew.-% Einheiten wenigstens eines mit Methylmethacrylat copolymerisierbaren Comonomeren, 0,05 bis 5 Gew.-% wenigstens eines organischen Peroxids mit einer Halbwertzeit-Temperatur für 10 h von mindestens 100 °C als UV-Stabilisator und gegebenenfalls üblichen Additiven und sind erfindungsgemäß dadurch gekennzeichnet, daß sie als organisches Peroxid wenigstens ein durch Reaktion von Methylmethacrylat mit Sauerstoff gebildetes polymeres Peroxid enthalten.

Es ist überraschend, daß gerade der Zusatz von bei relativ hohen Temperaturen zerfallenden polymeren Peroxiden, die bei der radikalischen Polymerisation nicht oder nicht vollständig abgebaut werden, eine deutliche Verbesserung der UV-Stabilität von Homo- oder Copolymeren auf Methylmethacrylatbasis ergibt und so entweder den Zusatz von sterisch gehinderten Aminen überflüssig macht oder es zuläßt, die Menge der zugesetzten sterisch gehinderten Amine herabzusetzen.

Bevorzugt enthält das erfindungsgemäße Kunststoffmaterial das organische Peroxid oder die organischen Peroxide in einer Menge von 0,1 bis 3, besonders in einer Menge von 0,2 bis 1 Gew.-%, bezogen auf das Gesamtgewicht des Kunststoffmaterials. Die Halbwertzeit-Temperatur für 10 h liegt bei den erfindungsgemäß enthaltenen polymeren Peroxiden vorzugsweise bei mindestens 110 °C.

Da die radikalische Polymerisation von Methylmethacrylat üblicherweise in einem Temperaturbereich von 20 bis 100 °C durchgeführt wird, können die als UV-Stabilisatoren enthaltenen hochzerfallenden organischen Peroxide vor der Polymerisation Zugesetzt werden. Obwohl es besonders zweckmäßig ist, die hochzerfallenden Peroxide vor der radikalischen Polymerisation zuzumischen, ist dies nicht zwingend erforderlich. Vielmehr können durch Reaktion von Methylmethacrylat mit molekularem Sauerstoff, z.B. Luftsauerstoff, die alternierenden Sauerstoff-Methylmethacrylat-Copolymeren gebildet werden, die polymere Peroxide sind und auch zumindest teilweise Halbwertzeit-Temperaturen für 10 h oberhalb 100 °C haben.

Die erfindungsgemäße UV-Stabilsierung mit hochzerfallenden polymeren Peroxiden ist besonders preisgünstig, da diese Verbindungen leicht in dem Polymerisationsansatz auf Methylmethacrylatbasis erzeugt werden können.

Eine besonders gute UV-Stabilisierung bekommt man jedoch durch Kombination der oben genannten hochzerfallenden organischen Peroxide mit wenigstens einem sterisch gehinderten Amin. Durch eine solche Kombination bekommt man eine synergistische Wirkung, so daß die sterisch gehinderten Amine in sehr viel geringerer Menge als nach dem Stand der Technik eingesetzt werden können oder eine höhere Stabilisierungswirkung ergeben.

Vorzugsweise sind diese zusätzlich zu den Peroxiden enthaltenen sterisch gehinderten Amine in dem Kunststoffmaterial in einer Menge von 0,01 bis 2 Gew.-%, besonders bevorzugt in einer Menge von 0,05 bis 1 Gew.-%, besonders in einer Menge von 0,1 bis 0,5 Gew.-%, bezogen auf die Gesamtmenge des Kunststoffmaterials, enthalten.

Die enthaltenen sterisch gehinderten Amine können solche sein, die in der EP-B1-0 016 870, der DE-A-3 421 859, der US-A-4 487 900 oder der US-A-4 593 064 beschrieben und formelmäßig dargestellt sind. Insofern wird bezüglich der Konstitution und Beschaffenheit der sterisch gehinderten Amine auf diese Veröffentlichungen Bezug genommen.

Zweckmäßig verwendet man in Kombination mit den Peroxiden sterisch gehinderte Amine der allgemeinen Formel 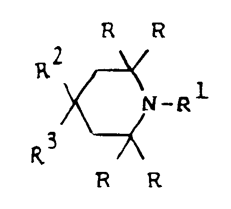
worin die Substituenten R gleiche oder verschiedene niedermolekulare Alkylgruppen mit 1 bis 4 Kohlenstoffatomen bedeuten, R¹ ein Wasserstoffatom, eine niedermolekulare Alkygruppe mit 1 bis 22, vorzugsweise 1 bis 4 Kohlenstoffatomen, eine Acylgruppe mit 1 bis 22, vorzugsweise 1 bis 4 Kohlenstoffatomen, eine Alkylarylgruppe mit 1 bis 22 Kohlenstoffatomen, der Phenyl- oder Naphthyirest, eine Alkoxygruppe mit 1 bis 22, vorzugsweise 1 bis 4 Kohlenstoffatomen, eine Hydroxylgruppe oder die Gruppe -(CH₂)ₓ-OY bedeutet, worin x eine ganze Zahl von 1 bis 4, vorzugsweise 2 bedeutet und Y ein Wasserstoffatom, eine Alkyl- oder Acylgruppe mit 1 bis 22, vorzugsweise 1 bis 4 Kohlenstoffatomen, den Phenylrest oder Naphthylrest bedeutet, wobei alle übrigen Alkylgruppen oder Alkylteile der angegebenen Gruppen geradkettig oder verzweigtkettig sein können, oder R¹ auch den radikalischen Sauerstoffrest -O^{·} beden kann, R² ein Wasserstoffatom oder eine Alkylgruppe mit 1 bis 10 Kohlenstoffatomen bedeutet, R³ eine Alkylgruppe mit 1 bis 10 Kohlenstoffatomen oder die Gruppe -X-CO-R⁴ bedeutet, worin X -O- oder -NH- ist und R⁴ eine Alkenylgruppe mit 2 bis 3 Kohlentoffatomen bedeutet, oder R² und R³ zusammengenommen mit dem benachbarten Kohlenstoffatom einen 5-oder 6gliedrigen heterozyklischen Ring bedeuten, worin die Heteroatome Sauerstoff- und/oder Stickstoffatome sind und dieser Ring durch Alkylgruppen mit t bis 10 Kohlenstoffatomen oder Hydroxylgruppen substituiert an kann.

In Falle dimerer Amine der obigen Formel kann R¹ auch 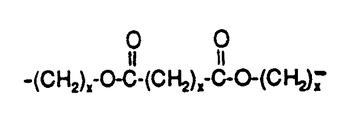
bedeuten, worin x die obige Bedeutung hat.

Besonders zweckmäßig sind jene sterisch gehindenen Amine, in denen R¹ eine Acylgruppe bedeutet. Besonders zweckmäßige derartige acylierte Amine sind die unter der Handelsbezeichnung TINUVIN 440und TINUVIN 622.

In den Copolymeren mit mindestens 80 Gew.-% Methylmethacrylateinheiten sind die Comonomereinheiten zweckmäßig solche der Ester der Acryl- oder Methacrylsäure, von Styrol oder Styrolderivaten, von Vinylacetat, von Acrylsäüre oder Methacrylsäure, von gegebenenfalls substitulertem Acrylamid oder Methacrylamid, von Acryinitril oder Methacryinitril, von Ethylenglycoldimethacrylat, Triallylcyanurat, Divinylbenzol oder Allylacrylat. Besonders bevorzugt sind als Copolymere Acrylester mit 1 bis 4 Kohlenstoffatomen im Esterrest, Insbesondere in einer Menge von 2 bis 15 Gew.-%. Besonders bevorzugt als Comonomeres ist Methylacrylat, besonders in einer Menge von 3 bis 8 Gew.-%.

Die Polymerisation der erfindungsgemäßen Kunststoffmaterialien wird zweckmäßig in Substanz, d. h. in Abwesenheit von wesentlichen Mengen an Lösungs- oder Verteilungsmitteln, nah dem sogenannten Kammerverfahren, durchgeführt. Hierbei können beispielsweise Polymerisatplatten mit einer Dicke von 1 bis 20 mm erhalten werden.

Die radikalische Polymerisation kann thermisch mit den üblichen radikalischen Initiatoren auf Peroxid- und/oder Azobasis ausgelöst werden. Die Polymerisationstemperatur richtet sich nach den Zerfallstemperaturen der verwendeten Initiatoren. Wenn es sich um Peroxide handelt, sind diese jedenfalls verschieden von den als UV-Stabilisatoren erfindungsgemäß verwendeten und haben Halbwertzeit-Temperaturen unterhalb jener der erfindungsgemäß verwendeten UV-Stabilisatoren. Üblicherweise liegt die Temperatur der Polymerisation zwischen 20 und 120 °C, bevorzugt zwischen 40 und 100 °C.

Weder die erfindungsgemäß verwendeten hochzerfallenden Peroxide noch die sterisch gehinderten Amine greifen in die Polymerisation ein. Zur Herabsetzung der Inhibierungsphase empfiehlt sich eine Inertisierung des Monomeransatzes, z. B. mit Inertgasen, wie Stickstoff, Argon oder Kohlendioxid. Die Initiatoren werden üblicherweise in einer Menge von 0,02 bis 0,2 Gew.-%, bezogen auf das gesamte Monomerengewicht, verwendet, wobei man Molekulargewichte von 500 000 und darüber erhalten kann.

Die Kunststoffmaterialien nach der Erfindung eignen sich besonders für Abdeckungen für Solarien, Bestrahlungsgeräte, Lampen und Gewächshäuser in der Form planer Platten oder in beliebiger Formgebung nach Thermoformung.

### Vergleichsbeispiel und Beispiel 1

Die Monomeransätze werden durch Zusatz üblicher radikalbildender Beschleuniger unter Inertgasatmosphäre (z.B. Argon) in einer aus zwei Silikatglasplatten und einer dazwischen am Rand umlaufenden Dichtungsschnur gebildeten Flachkammer in einem Temperaturprogramm von 45 bis 100 °C innerhalb von 8 bis 20 h zu einer klaren, z. B. 3 mm dicken Acrylglasplatte polymerisiert. Als radikalbildende Polymerisationsbeschleuniger können z. B. Azoverbindungen wie Azoisobutyronitril oder bei Polymerisationstemperatur radikalbildende Peroxide, wie z. B. 1,1-Bis-tertiär-butylperoxycyclohexan, tertiär-Butylperpivalat, tertiär-Butylper-3,5,5-trimethylhexanoat oder Gemische daraus sein.

Spektralphotometrisch werden an diesen Acrylglasplatten der Gelbindex und das UV-Transmissionsspektrum gemessen. Als charakteristischer Wert wird im UV-Transmissionsspektrum der 45 %-Wert (Δ 45 % Lichtdurchlässigkeit) in der Absorptionskante bestimmt. Anschließend wurden aus den jeweiligen Acrylglasplatten Probekörper herausgesägt und diese dem Schnellbewitterungsversuch im Xenotest 250 unterworfen oder mit Belarium S-Strahlern (Hersteller: Wolff-Systeme) oder mit Philips TL 09-Strahlern im Abstand von ca. 2 cm bestrahlt. Nach verschiedenen Bestrahlungsintervallen wurden wiederum die Gelbindices und die 45 %-Werte bestimmt (in der Tabelle: 1000 und 5000 h-Werte).

Ein Material ist nun umso UV-strahlungsstabiler, je weniger der Gelbindex nach langen Bestrahlungsintervallen gegenüber dem Anlieferungswert zugenommen hat und je kurzwelliger der 45 %-Wert nach langen Bestrahlungsintervallen ist.

Nach der oben beschriebenen Flachkammermethode wurde ein Gemisch aus 92 Gewichtsteilen Methylmethacrylat und 8 Gewichtsteilen Methylacrylat peroxidisch initiiert zu Acrylglasplatten im Format 250 x 250 x 3 mm polymerisiert.

Das Vergleichsbeispiel ist dabei ein Monomeransatz, der vor dem Verfüllen in die Flachkammer unter Argonatmosphäre (= Inertgas) und Zuatz von 0,03 Gew.-% Tertiär-butylper-3,5,5-trimethylhexanoat bei 80 °C bis zu einer Viskosität von 35 sec (DIN-Auslaufbecher; Düse 4 mm) anpolymerisiert wurde. Anschließend wurden die üblichen radikalischen Polymerisationsbeschleuniger zugesetzt, der Ansatz mit Argon inert gehalten und in der Flachkammer auspolymerisiert.

Im Beispiel 1 wurde vor der Anpolymerisation bei 80 °C für mehrere Minuten ein Luftstrom durch den Ansatz geperlt. Dabei bilden sich die polymeren Peroxide aus Luftsauerstoff und den (Meth)acrylaten. Nach Anpolymerisation (gleiche Initiierung wie im Vergleichsbeispiel) wurde auch hieraus eine 3 mm dicke Acrylglasplatte hergestellt.

Die Acrylglasplatten aus beiden Beispielen wurden im Xenotest 250 bestrahlt und ergeben dabei folgende optische Werte.

| | | **Xenotest 250** | | |
|---|---|---|---|---|
| | | **0 h** | **500 h** | **2000 h** |
| Vergleichsbeispiel | Gelbindex | 0,3 | 1,7 | 1,9 |
| | 45 % (nm) | 266 | 282 | 280 |
| Beispiel 1 | Gelbindex | 0,3 | 0,6 | 0,6 |
| | 45 % (nm) | 280 | 268 | 263 |

## Patentansprüche

1. Kunststoffmaterial mit hoher UV-Durchlässigkeit, bestehend aus einem Homo- oder Copolymeren aus 80 bis 100 Gew.-% Methylmethacrylateinheiten und bis zu 20 Gew.-%-Einheiten wenigstens eines mit Methylmethacrylat copolymerisierbaren Comonomeren, 0,05 bis 5 Gew.-% wenigstens eines organischen Peroxids mit einer Halbwertzeit-Temperatur für 10 h von mindestens 100 °C als UV-Stabilisator und gegebenenfalls üblichen Additiven, **dadurch gekennzeichnet**, daß es als organisches Peroxid wenigstens ein durch Reaktion von Methylmethacrylat mit Sauerstoff gebildetes polymeres Peroxid enthält.

2. Kunststoffmaterial nach Anspruch 1 **dadurch gekennzeichnet**, daß es wenigstens ein organisches Peroxid mit einer Halbwertzeit-Temperatur für 10 h von mindestens 110 °C enthält.

3. Kunststoffmaterial nach Anspruch 1 oder 2, **dadurch gekennzeichnet**, daß es die organischen Peroxide in einer Menge von 0,1 bis 3, vorzugsweise 0,2 bis 1 Gew.-%, bezogen auf die Menge des Kunststoffmaterials, enthält.

4. Kunststoffmaterial nach einem der Ansprüche 1 bis 3, **dadurch gekennzeichnet** daß es zusätzich als UV-Stabilisator wenigstens ein sterisch gehindertes Amin enthält

5. Kunststoffmaterial nach Anspruch 4, **dadurch gekennzeichnet**, daß es das sterisch gehinderte Amin in einer Menge von 0,01 bis 2 Gew.-%, vorzugsweise von 0,05 bis 1 Gew.-%, besonders 0,1 bis 0.5 Gew.-% enthält.

6. Kunststoffmaterial nach Ansprucn 4 oder 5, **dadurch gekennzeichnet,** daß es ein sterisch gehindertes Amin der allgemeinen Formel 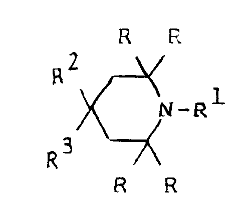 worin die Substituenten R gleiche oder verschiedene niedermolekulare Alkylgruppen mit 1 bis 4 Kohlenstoffatomen bedeuten, R¹ ein Wasserstoffatom, eine niedermolekulare Alkylgruppe mit 1 bis 22, vorzugsweise 1 bis 4 Kohlenstoffatomen, eine Acylgruppe mit 1 bis 22, vorzugsweise mit 1 bis 4 Kohlenstoffatomen, eine Alkylarylgruppe mit 1 bis 22 Kohlenstoffatomen, den Phenyl- oder Naphthylrest, eine Alkoxygruppe mit 1 bis 22, vorzugsweise 2 bis 4 Kohlenstoffatomen, eine Hydroxylgruppe, die Gruppe 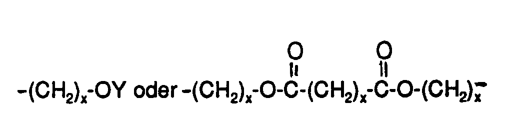 bedeutet, worin x eine ganze Zahl von 1 bis 4, vorzugsweise 2 bedeutet und Y ein Wasserstoffatom, eine Alkyl- oder Acylgruppe mit 1 bis 22, vorzugsweise 1 bis 4 Kohlenstoffatome, den Phenylrest oder Naphthylrest bedeutet, wobei alle übrigen Alkylgruppen oder Alkylteile der angegebenen Gruppen geradkettig oder verzweigtkettig sein können, oder R¹ auch den radikalischen Sauerstoffrest -O^{·} bedeuten kann, R² ein Wasserstoffatom oder eine Alkylgruppe mit 1 bis 10 Kohlenstoffatomen bedeutet, R³ eine Alkylgruppe mit 1 bis 10 Kohlenstoffatomen oder die Gruppe -X-CO-R⁴ bedeutet, worin X -O- oder -NH- ist und R⁴ eine Alkenylgruppe mit 2 bis 3 Kohlenstoffatomen bedeutet, oder R² und R³ zusammengenommen mit dem benachbarten Kohlenstoffatom einen 5-oder 6gliedrigen heterozyklischen Ring bedeuten, worin die Heteroatome Sauerstoff- und/oder Stickstoffatome sind und dieser Ring durch Alkylgruppen mit 1 bis 10 Kohlenstoffatomen oder Hydroxylgruppen substituiert sein kann, enthält.

7. Kunststoffmaterial nach einem der Ansprüche 1 bis 6, **dadurch gekennzeichnet**, daß es als Comonomereinheiten solche von Estern der Acryl- oder Methacrylsäure, von Styrol oder Styrolderivaten, von Vinylacetat, von Acrylsäure oder Methacrylsäure, von gegebenenfalls substituiertem Acrylamid oder Methacrylamid, von Acrylnitril oder Methacryinitril oder Monomeren mit zwei oder mehr Doppelbindungen, wie Ethylenglycoldimethacrylat, Trialiyicyanurat, Divinylbenzol oder Allylacrylat enthält.

8. Kunststoffmaterial nach Anspruch 7, **dadurch gekennzeichnet**, daß es als Comonomereinheiten solche von Acrylsäureestern mit 1 bis 4 Kohlenstoffatomen im Esterrest, insbesondere von Methylacrylat enthält.

9. Kunststoffmaterial nach Anspruch 7 oder 8, **dadurch gekennzeichnet**, daß es Comonomereinheiten in einer Menge von 2 bis 15, vorzugsweise 3 bis 8 Gew.-% des Copolymeren enthält.

10. Verfahren zur Herstellung eines Kunststoffmaterials nach einem der Ansprüche 1 bis 9 durch Polymerisieren von Methylmethacrylat, von dem gegebenenfalls bis zu 20 Gew.-% durch wenigstens ein mit Methylmethacrylat copolymerisierbares Comonomeres ersetz sind, in Gegenwart eines radikalbildenden Initiators und gegebenenfalls unter Erwärmen, **dadurch gekennzeichnet,** daß man das gebildete Homo- oder Copolymere mit Sauerstoff unter Bildung von 0,05 bis 5 Gew.-%, bezogen auf die Menge des Monomerengemisches, wenigstens eines polymeren Peroxids mit einer Halbwertzeit-Temperatur für 10 h von mindestens 100 °C umsetzt.

11. Verwendung eines Kunststoffmaterials nach einem der Ansprüche 1 bis 9 als Abdeckung für Solarien, Bestrahlungsgeräte, Lampen und Gewächshäuser.

## Claims

1. Plastics material with a high UV transmission, composed of a homopolymer or copolymer of 80 to 100 % by weight of methylmethacrylate components and up to 20 % by weight of components of at least one comonomer which is copolymerisable with methymethacrylate, 0.05 to 5 % by weight of at least one organic peroxide with a half-time temperature for 10 hours of at least 100 °C as UV stabiliser and where appropriate usual additives, characterised in that it contains at least one polymeric peroxide formed by reaction of methylmethacrylate with oxygen as the organic peroxide.

2. Plastics material according to claim 1, characterised in that it contains at least one organic peroxide with a half-time temperature for 10 hours of at least 110 °C.

3. Plastics material according to claim 1 or 2, characterised in that it contains the organic peroxide in a quantity of 0.1 to 3, preferably 0.2 to 1 % by weight with respect to the quantity of the plastics material.

4. Plastics material according to one of claims 1 to 3, characterised in that it additionally contains at least one sterically hindered amine as a UV stabiliser.

5. Plastics material according to claim 4, characterised in that it contains the sterically hindered amine in a quantity of 0.01 to 2 % by weight, preferably 0.05 to 1 % by weight, particularly 0.1 to 0.5 % by weight.

6. Plastics material according to claim 4 or 5, characterised in that it contains a sterically hindered amine of the general formula 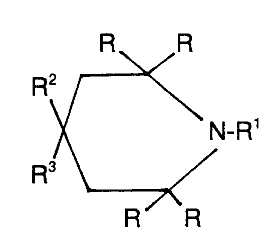 wherein the substituents R represent the same or different low molecular alkyl groups with 1 to 4 carbon atoms, R¹ represents a hydrogen atom, a low molecular alkyl group with 1 to 22, preferably 1 to 4 carbon atoms, an acyl group with 1 to 22, preferably 1 to 4 carbon atoms, an alkyl aryl group with 1 to 22 carbon atoms, the phenyl or naphthyl residue, an alkoxy group with 1 to 22, preferably 2 to 4 carbon atoms, a hydroxyl group, the group 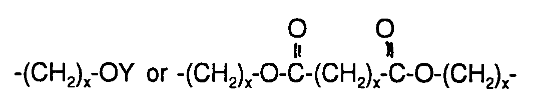 wherein x represents a whole number from 1 to 4, preferably 2, and Y represents a hydrogen atom, an alkyl or acyl group with 1 to 22, preferably 1 to 4 carbon atoms, the phenyl residue or naphtha residue, wherein all remaining alkyl groups or alkyl parts of the groups indicated may be straight chains or branched chains, or R¹ can also represent the radical oxygen residue -O^{·}, R² represents a hydrogen atom or an alkyl group with 1 to 10 carbon atoms, R³ represents an alkyl group with 1 to 10 carbon atoms or the group - -X-CO-R⁴, wherein X is -O- or -NH-, and R⁴ represents an alkenyl group with 2 to 3 carbon atoms, or R² and R³ taken together with the adjacent carbon atom represent a 5 or 6 membered heterocyclic ring, wherein the heteroatoms are oxygen and/or nitrogen and this ring can be replaced by alkyl groups with 1 to 10 carbon atoms or hydroxyl groups.

7. Plastics material according to one of claims 1 to 6, characterised in that as comonomer components it contains such as those esters of acrylic or methacrylic acid, styrene or styrene derivatives, vinyl acetate, acrylic acid or methacrylic acid, where appropriate substituted acrylic amide or methacrylic amide, acrylonitrile or methacrylonitrile or monomers with two or more double bonds such as ethylene glycoldimethacrylate, triallylcyanurate, diphenylethylene or allylacrylate.

8. Plastics material according to claim 7, characterised in that it contains such as those acrylic acid esters with 1 to 4 carbon atoms in the ester residue, in particular methyl acrylate as comonomer components.

9. Plastics material according to claim 7 or 8, characterised in that it contains comonomer components in a quantity of 2 to 15, preferably 3 to 8% by weight of the copolymer.

10. Method of preparation of a plastics material according to one of claims 1 to 9, by polymerisation of methylmethacrylate, of which, where appropriate, up to 20 % by weight is replaced by at least one comonomer which is copolymerisable with methylmethacrylate, in the presence of a radical forming initiator and where appropriate with heating, characterised in that the homopolymer or copolymer formed is reacted with oxygen, producing 0.05 to 5 % by weight with respect to the quantity of the monomer mixture of at least one polymeric peroxide with a half-time temperature for 10 hours of at least 100 °C.

11. Use of a plastics material according one of claims 1 to 9 as covering material for solaria, radiation equipment, lamps and greenhouses.

## Revendications

1. Matière plastique ayant une grande transparence (ou transmittance) à l'ultraviolet, et consistant en un homopolymère ou en un copolymère de 80 à 100% en poids de motifs méthacrylate de méthyle et jusqu'à 20% en poids de motifs d'au moins un comonomère copolymérisable avec le méthacrylate de méthyle, 0,05 à 5% en poids d'au moins un peroxyde organique ayant, pour une période de demi-vie de 10 heures, une température d'au moins 100 °C, comme stabilisant à l'égard de l'ultraviolet et éventuellement des additifs usuels, matière caractérisée en ce qu'elle contient comme peroxyde organique au moins un peroxyde polymère formé par réaction du méthacrylate de méthyle avec l'oxygène.

2. Matière plastique selon la revendication 1, caractérisée en ce qu'elle contient au moins un peroxyde organique ayant, pour une période de demi-vie de dix heures, une température d'au moins 110 °C.

3. Matière plastique selon la revendication 1 ou 2 caractérisée en ce qu'elle contient les peroxydes organiques en une quantité de 0,1 à 3, avantageusement 0,2 à 1% en poids, par rapport à la quantité de la matière plastique.

4. Matière plastique selon l'une des revendications 1 à 3, caractérisée en ce qu'elle contient en outre, comme stabilisant à l'égard de l'ultraviolet, au moins une amine présentant de l'empêchement stérique.

5. Matière plastique selon la revendication 4, caractérisée en ce qu'elle contient l'amine présentant de l'empêchement stérique, présente en une quantité de 0,01 à 2% en poids, avantageusement 0,05 à 1% en poids, notamment 0,1 à 0,5% en poids.

6. Matière plastique selon la revendication 4 ou 5, caractérisée en ce qu'elle contient une amine présentant de l'empêchement stérique et répondant à la formule générale: 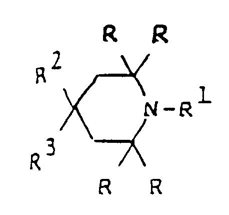 dans laquelle les substituants R représentent des groupes alkyles identiques ou différents, à bas poids moléculaire, comportant 1 à 4 atomes de carbone; R¹ représente un atome d'hydrogène, un groupe alkyle à bas poids moléculaire ayant 1 à 22, avantageusement 1 à 4 atomes de carbone, un groupe acyle ayant 1 à 22, avantageusement 1 à 4 atomes de carbone, un groupe alkylaryle ayant 1 à 22 atomes de carbone, le reste phényle ou naphtyle, un groupe alcoxy ayant 1 à 22, avantageusement 2 à 4 atomes de carbone, un groupe hydroxyle, le groupe 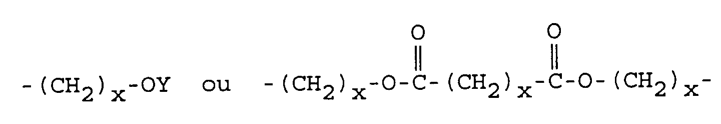 dans lequel x est un nombre entier valant 1 à 4, avantageusement 2, et Y représente un atome d'hydrogène, un groupe alkyle ou acyle ayant 1 à 22, avantageusement 1 à 4 atomes de carbone, le reste phényle ou le reste napthyle, tous les autres groupes alkyles ou les parties alkyles des groupes indiqués pouvant être linéaires ou ramifiés, ou bien R¹ pouvant également représenter le reste radicalaire oxygène -O*; R² représente un atome d'hydrogène ou un groupe alkyle ayant 1 à 10 atomes de carbone; R³ représente un groupe alkyle ayant 1 à 10 atomes de carbone ou représente le groupe -X-CO-R⁴, dans lequel X représente O ou NH et R⁴ représente un groupe alcényle ayant 2 à 3 atomes de carbone, ou bien R² et R³, pris ensemble avec l'atome de carbone voisin, forment un noyau hétérocyclique pentagonal ou hexagonal, les hétéroatomes étant des atomes d'oxygène et/ou d'azote, et ce noyau pouvant être substitué par des groupes alkyles ayant 1 à 10 atomes de carbone ou par des groupes hydroxyles.

7. Matière plastique selon l'une des revendications 1 à 6, caractérisée en ce qu'elle contient comme motifs de comonomère ceux d'esters de l'acide acrylique ou de l'acide méthacrylique, du styrène ou de dérivés du styrène, de l'acétate de vinyle, de l'acide acrylique ou de l'acide méthacrylique, d'un acrylamide ou méthacrylamide éventuellement substitué, de l'acrylonitrile ou du méthacrylonitrile ou des monomères comportant deux ou plus de deux doubles liaisons, comme le diméthacrylate d'éthylène glycol, le cyanurate de triallyle, le divinyl benzène ou l'acrylate d'allyle.

8. Matière plastique selon la revendication 7, caractérisée en ce qu'elle contient comme motifs de comonomère, ceux d'esters de l'acide acrylique comportant 1 à 4 atomes de carbone dans le reste ester, notamment l'acrylate de méthyle.

9. Matière plastique selon la revendication 7 ou 8, caractérisée en ce qu'elle contient des motifs de comonomères, présents en une quantité de 2 à 15, avantageusement de 3 à 8, pour cent en poids du copolymère.

10. Procédé de préparation d'une matière plastique selon l'une des revendications 1 à 9, par polymérisation du méthacrylate de méthyle, dont éventuellement jusqu'à 20 % en poids sont remplacés par au moins un comonomère copolymérisable avec le méthacrylate de méthyle, en présence d'un amorceur générateur de radicaux et éventuellement avec chauffage, procédé caractérisé en ce qu'on fait réagir avec de l'oxygène l'homopolymère ou le copolymère ainsi formé, avec formation de 0,05 à 5 % en poids, par rapport à la quantité du mélange des monomères, d'au moins un peroxyde polymère, ayant, pour une période de demi-vie de 10 heures, une température d'au moins 100°C.

11. Utilisation d'une matière plastique selon l'une des revendications 1 à 9 pour le recouvrement protecteur de solariums, d'appareils d'irradiation, de lampes et de serres.
